# EUROPEAN PATENT SPECIFICATION

(11) **EP 1 620 972 B1**
(45) Date of publication and mention of the grant of the patent: **15.08.2007**
(21) Application number: 03720557.2
(22) Date of filing: 08.05.2003
(51) Int. Cl.: H04L 12/18, H04Q 7/22

(54) **METHOD AND DEVICE FOR PROVIDING POINT-TO-MULTIPOINT SERVICES**
VERFAHREN UND VORRICHTUNG FÜR PUNKT-ZU-MEHRPUNKTDIENSTE
PROCEDE ET DISPOSITIF PERMETTANT DE FOURNIR DES SERVICES POINT A MULTIPOINT

(43) Date of publication of application: 01.02.2006
(73) Proprietor: TELEFONAKTIEBOLAGET LM ERICSSON (publ), 164 83 Stockholm (SE)
(72) Inventor: KELLER, Ralf, 52146 Würselen (DE); HUNDSCHEIDT, Frank, NL-6464 GC Kerkrade (NL); GINE SADO, Carol, 08530 La Garriga, Barcelona (ES); LOHMAR, Thorsten, 52074 Aachen (DE)
(74) Representative: HOFFMANN EITLE
(86) International application number: PCT/EP2003/004839
(87) International publication number: WO 2004/100447

(56) References cited:
- WO-A-00/33535
- WO-A-94/28687
- WO-A-02/080401
- "3rd Generation Partnership Project; Technical Specification Group Services and System Aspects; Multimedia Broadcast/Multicast Service (MBMS); Architecture and Functional Description (Release 6)" 3GPP TS 23.246 V.0.5.0, April 2003 (2003-04), XP002266263
- KIRSTEIN PETER T ET AL: "The MECCANO Internet Multimedia Conferencing Architecture" INTERNET CITATION, [Online] December 1999 (1999-12), XP002266264 Retrieved from the Internet: <URL:www.ejeisa.com/nectar/meccano/meccano -r3.1.pdf> [retrieved on 2004-01-06]

## Description

### [Field of the invention]

The present invention relates to a method of providing point-to-multipoint services in a communication system that comprises a network part and terminals arranged for communicating with the network part, and it relates to a corresponding network part and appropriate terminals.

### [Background of the invention]

Within the field of communication a number of different transmission schemes are known. One such transmission scheme is point-to-point communication, in which a communication is conducted from one point (the sender) to one other point (the receiver). Another communication scheme is referred to as point-to-multipoint. In point-to-multipoint communications, a sender sends one message on an appropriate point-to-multipoint path, such that the multiplication of the message for a plurality of receivers is done by the network between the sender and the receivers. Two subcategories of point-to-multipoint communications are multicasting and broadcasting. In broadcasting, a transmission is sent to every receiver in a certain coverage area (where the term "area" can be understood physically and/or logically). In multicasting a transmission is simultaneously sent to a specific group (e.g. a predetermined set of addresses). An example of the latter is the known IP multicast group.

If certain information is to be sent to a plurality of destinations, then point-to-multipoint communications are generally more bandwidth efficient than point-to-point communications. The basic aspects and advantages of point-to-multipoint communications are well known and therefore do not need to be explained in more detail here.

Due to the bandwidth efficiency, more efforts are presently being made for providing point-to-multipoint services in communication networks, especially in mobile communication networks, in which bandwidth is still a premium resource. More specifically, efforts are being undertaken for implementing multimedia services as point-to-multipoint services, as multimedia services typically require increased bandwidth, because they perform transmissions in which several types of data (e.g. video and audio) are sent simultaneously.

WO94/28687 describes a cellular radio system having the facility for a call to be broadcast from a control center or from anyone of a plurality of mobile units to all other units. Each cell of the cellular system allocates a single channel to the broadcast service, irrespective of the number of mobile units in the cell. An embodiment is described, in which no channel is allocated to a cell unless at least one mobile unit responds to a paging signal in that cell. Paging may continue throughout a broadcast call to allow a channel to be allocated when a mobile unit enters a previously unoccupied cell or to allow release of a channel should all mobiles leave a previously occupied cell. The broadcast facility can be provided on a cellular network which also supports other mobile units that do not receive the broadcast service and whose operation is not affected by it.

### [Problem underlying the invention]

Although it is in principle possible to implement a point-to-multipoint service in accordance with well-known broadcasting schemes as used in conventional television and radio (i.e. a certain "program" or service is provided on a fixedly dedicated communication path or channel, always using the same technical parameters), this is impractical for modern communication systems, especially packet-based communication systems, because it leads to a considerable, waste of bandwidth. More specifically, the classical broadcasting approach consists in reserving a certain transmission path (e.g. a frequency channel) for a given service, and each possible recipient simply needs to tune into the transmission path when desired. This has the disadvantage that the reserved transmission path cannot be used otherwise, even if the service for which it is reserved is inactive.

As a consequence, it is envisioned to provide point-to-multipoint services that consist of two steps: first a notification message is sent, which informs receivers of an upcoming content transmission (e.g. a multimedia stream), followed by the notified content transmission as a point-to-multipoint communication. The notification messages will typically contain necessary or desirable information on the upcoming content transmission, such as the transmission path to switch to, the type of codec to use and the start time. If a recipient of the notification desires to receive the content transmission, then it will undertake the necessary steps.

With regard to the describing and announcing of point-to-multipoint transmissions, there are known the so-called Session Description Protocol (SDP), described in RfC 3266, the Session Announcement Protocol (SAP), described in RfC 2974, and the Session Initiation Protocol (SIP), described in RfC 3261. The Session Description Protocol is intended for assisting in advertising multimedia conference sessions, and in communicating set-up information to participants who want to join the session. It is used together with the Session Announcement Protocol and the Session Initiation Protocol. SDP packets usually include information on the session itself and the media being communicated. As session information it defines the name and the purpose of the session and the time when the session is active. Regarding media information, it includes type of media (audio, video, ...), transport protocol (e.g. RTP/UDP/IP), media format and further information possibly necessary for receiving those media.

The Session Announcement Protocol is designed for announcing the existence of long-lived wide-area multicast sessions, but not for announcing the actual beginning of a transmission. A SAP announcer therefore periodically sends an announcement, which contains a session description, to a well-known multicast address and port. The announcement is multicast with the same scope as the session it is announcing. It is not aware of the presence/absence of any SAP listener. Much rather, SAP assumes that potential recipients will listen to the well-known multicast addresses to which SAP announcers send announcements.

The Session Initiation Protocol is a signalling protocol for establishing, modifying or terminating multimedia sessions. It works at the application layer and uses the session description protocol for media description. When initialising a session, the session initialisation protocol requires locating the users that are going to be called. This is done by a proxy server. Then SIP delivers a description of the session the user is being invited to. Once the user is located and the session description delivered, SIP is used to carry the response (e.g. accept, reject) to the initiator of the session. Finally, SIP is used to terminate the session. It is noted that SIP is point-to-point based.

One of the disadvantages of sending such notifications as point-to-multipoint transmissions is a lack of reliability. In other words, it cannot be guaranteed that an intended recipient will receive the notification, such that it cannot be guaranteed that such an intended recipient will then be able to receive the subsequent point-to-multipoint content transmission. While this is often an acceptable disadvantage, it is nonetheless desirable to also be able to provide reliable notifications for point-to-multipoint services. This is especially the case for mobile communication systems, in which there may be temporary disturbances in the communication between a terminal and the network, such that a given terminal might miss a notification (e.g. sent on a fixed notification channel) due to such temporary disturbances, where the disturbances again disappear by the time that the actual content transmission (e.g. on a channel announced in the notification) takes place, such that the given terminal would have been capable of receiving the content transmission, had it only received the notification.

The straight-forward solution to this problem consists in employing well-known reliable point-to-point notification mechanisms, such as those known in connection with the Short Message Service (SMS) or the Multimedia Message Service (MMS). The MMS notification system and content retrieval system according to 3GPP 23.140 operates in such a way that when a MMS relay/server receives a multimedia message, it generates a multimedia message notification to the MMS user agent located in the user terminal. The MMS agent can then either reject the multimedia message or retrieve it immediately or later. The MMS relay/server is responsible for the storage of messages until the MMS user agent becomes reachable (or until the multimedia messages expires). The notification procedure between MMS relay/server and the MMS user agent is done on the basis of a SMS communication. SMS is a store-and-forward mechanism that forwards the message in case the intended recipient is online and stores the message in case the recipient is not available (e.g. off-line or out-off-coverage). As soon as the intended recipient becomes available again, the message is transferred. MMS uses WAP push for conveying the content.

The use of such reliable point-to-point notifications (e.g. SMS) has the disadvantage of being impracticable when performing multicasting of the content transmission to a large group of recipients, as an individual point-to-point message must be sent to each member of the group prior to sending the content transmission as a multicast transmission. This can lead to complicated scheduling problems, as the timing of the point-to-multipoint content transmission can only be fixed once the notification procedure has been completed, the timing of which cannot be predicted. Moreover, performing of a point-to-point notification in connection with broadcasting of a content transmission, where the sender does not know the individual recipients, is practically impossible.

### [Object of the invention]

It is an object of the invention to provide an improved notification scheme for announcing point-to-multipoint content transmissions, the improvement especially being achieved with respect to reliability.

### [Summary of the invention]

This object is achieved by the subject-matter described in the independent claims. Advantageous embodiments are described in the dependent claims.

In accordance with the invention, in a point-to-multipoint-service provided in a communication system that comprises a network part and terminals arranged for communicating with the network part, the network part first performs a first notification procedure that comprises transmitting a point-to-multipoint service notification message that comprises information on a content transmission and subsequently performing the content transmission in point-to-multipoint fashion. The point-to-multipoint notification can be any usable broadcast or multicast scheme, e.g. a best-effort scheme that does not require intended recipients to be available. In one or more terminals, a response procedure is performed for sending a response message to the network part, said response message being generated in response to receiving one or both of the notification message and the content transmission. In other words, a response message can be generated in response to receiving the notification message, in response to receiving the content transmission, or in response to receiving both the notification message and the content transmission.

In the network part, a verification procedure is conducted that comprises determining the identities of a first group of terminals on the basis of the response messages and comparing the identities of the terminals of the first group with identities of a second group of terminals associated with the content transmission. It is of no basic importance for the present invention which criteria are chosen for determining the first group, or how the second group is defined, except that the second group identifies terminals that are to be reliably notified. In accordance with the invention, a second notification procedure is conducted for those terminals of the second group that are not in the first group. This second notification procedure comprises sending a second service notification message to those terminals of the second group that are not in the first group, where these notification messages again comprise information on the content transmission, and where the second notification procedure comprises a mechanism for providing delivery of messages to terminals temporarily not communicating with the network part, i.e. a reliable mechanism.

On the basis of the above arrangement, an improved providing of point-to-multipoint services is achieved. Namely, the present invention simplifies the reliable notification of terminals in a communication system offering point-to-multipoint services, by providing a reliable notification (the second notification procedure) only to a limited group of terminals, namely only to those terminals of the second group that are not in the first group. Namely, the second group of terminals is a group eligible for reliable notification (this can e.g. be all members of a certain point-to-multipoint service, or only a subgroup of such members, e.g. premium members), but it is not necessary to send a reliable notification to each and every one of the members of the second group. This is due to the fact that a first (unreliable) notification procedure is done in point-to-multipoint fashion, and a reliable notification (second notification procedure) is only done for those members of the second group that do not respond in a predetermined way (e.g. for those that do not respond at all). This greatly reduces the burden on the network resources, but at the same time provides the possibility of reliable notification to the members of the second group.

It may be noted that the second notification procedure can be a (reliable) point-to-multipoint communication procedure or can be a reliable point-to-point notification procedure. Equally, the information on the content transmission contained in the second service notification message can relate to the same point-to-multipoint content transmission indicated in the first service notification message (if the point-to-multipoint content transmission still lies ahead), or can provide alternatives for accessing the content transmission (e.g. a future retransmission of the content as a point-to-multipoint transmission, or via a point-to-point transmission, e.g. as a multimedia message (MMS)).

### [Brief description of figures)

Various aspects and advantages of the present invention will now be described in more detail with reference to specific embodiments and with reference to the enclosed figures, where
- Fig. 1: shows a schematic block diagram of a communication system in which the present invention can be embodied,
- Fig. 2: shows a flow chart of a basic embodiment of the method of the present invention, and
- Fig. 3: shows a schematic block diagram of a terminal according to the present invention.

### [Detailed description of embodiments]

In the following description of detailed embodiments, reference will often be made to a wireless communication system, in which terminals are mobile terminals. Indeed this is a preferred application of the concept of the invention, as such wireless communication systems typically need to be more bandwidth efficient than other types of communication systems, and are more prone to communication disturbances between terminals and the network, but it is pointed out that the concepts of the present invention can be employed in any type of communication system, including wire-line communication systems.

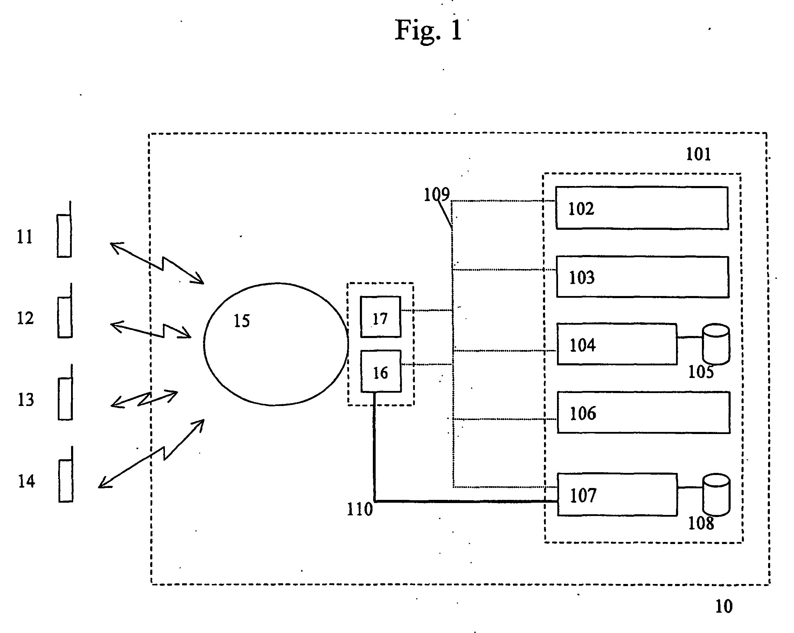

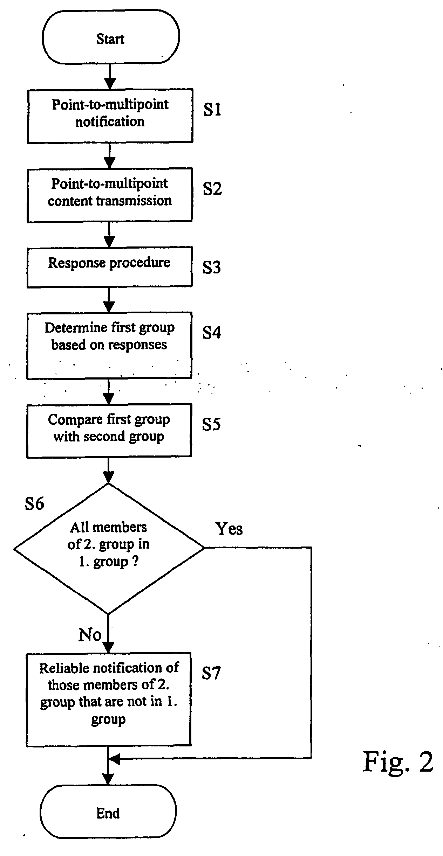

A basic embodiment of the method of the present application will now be described with reference to Figs. 1 and 2. In Fig. 1, a communication system is shown that comprises a network part 10 and terminals 11-14, which are arranged for communicating with the network part 10. As can be seen, the terminals 11-14 are shown as mobile terminals that are adapted for radio communication with the network part 10. The network part 10 comprises an access and call management part 15 that provides access for the wireless terminals 11-14 to the network part 10, and provides all necessary functions for managing communications to and from the terminals 11-14. As such, the access and management part 15 can be constructed in conventional fashion as known from conventional mobile communication systems. For example, the access and management section 15 can consist of a known radio access network (RAN) and higher level call management part including such entities as a GPRS support node (GSN), a mobile switching center (MSC) or the like. Consequently, a further description is not necessary. The network part 10 shown in Fig. 1 furthermore comprises specific entities 16, 17 and 101 arranged for providing point-to-multipoint services. These entities will be described in more detail further on.

Fig. 2 shows a flow chart of a basic embodiment of the present invention. In a first step S1 the network part 10 performs a first notification procedure that comprises transmitting a point-to-multipoint service notification message that comprises information on a content transmission. Subsequently, in step S2 the content transmission is performed in point-to-multipoint fashion.

The point-to-multipoint notification procedure of step S1 can be performed in any suitable or desirable way. Namely, it can be a multicast transmission, in which the notification message is sent to a certain multicast group (i.e. a group of destination addresses) or can be a broadcast message sent to all listening terminals within a certain coverage area. Schemes for multicasting or broadcasting in communication systems are well known, such that a further discussion is not necessary here.

The notification procedure of step S1 does not need to be reliable. In other words, the network entity controlling the transmission of the first notification messages does not need to be aware of which of the intended recipients are actually receiving the notification and/or the content transmission.

In step S3, one or more of the terminals 11-14 perform a response procedure for sending a response message to the network part. The response message may be generated in response to receiving the notification message from step S1 and/or the content transmission of step S2. Different alternatives and embodiments for the response procedure will be described further on.

In the steps following step S4, the network part 10 performs a verification procedure. This verification procedure comprises determining the identities of a first group of terminals on the basis of the response messages in step S4.

Subsequently, the identities of the terminals of the first group are compared with identities of a second group of terminals in step S5. The second group of terminals is associated in a predetermined way with the content transmission of step S2. Examples for determining the first group and examples of associating the second group with the content transmission will be provided further on. At this stage it can be pointed out that the second group of terminals relates to a group that should reliably receive the notification and/or the content transmission, and the first group describes those terminals that received the first point-to-multipoint notification (step S1) and/or the point-to-multipoint content transmission (S2) in a predetermined way.

In the method of Fig. 2, a step S6 is conducted, in which it is determined whether all of the terminals in the second group are also in the first group. If this is the case ("YES" in step S6), then the overall procedure ends, as the terminals that are to be reliably notified and/or reliably provided with the content transmission (group 2) have confirmed the receipt by also being members of the first group.

On the other hand, if there is a difference between group 2 and group 1, i.e. if there are terminals in group 2 that are not in group 1, then a second notification procedure S7 is conducted. In other words, for those terminals of the second group that are not in the first group, i.e. terminals that are to be reliably provided with the notification and/or the content transmission but have not confirmed this via the response procedure of step S3, a second service notification message comprising information on the content transmission is performed, where the second notification procedure comprises a mechanism for providing delivery of messages to terminals temporarily not communicating with the network part, i.e. the second notification procedure of step S7 is reliable. Different possibilities for performing the procedure of step S7 will be described further on.

In accordance with the concept embodied by Fig. 2, a reliable notification is not necessary for all members of the second group, but only for those members that did not respond in a predetermined way in step S3. As a consequence, the burden on network resources is greatly reduced, while a reliable notification to all members of the second group can nonetheless be provided.

It may be noted that the method described in connection with Fig. 2 is only an example, and other implementations are possible. For example, it is not necessary that step S3 is performed subsequent to step S2 if the response procedure of S3 is designed to respond to receiving a notification message, but not to respond to receiving the content transmission. In this case, step S3 can also be performed in parallel to step S2, or prior thereto. In fact, basically the content transmission S2 can occur at any suitable time, even after the verification procedure (if the response procedure does not react to receiving the content transmission).

Now various details and alternative implementations will be described. The information on the content transmission contained in the point-to-multipoint service notification message of step S1 can be chosen in any desired or suitable way. For example, it may comprise one or more of:
- a set of alphanumeric characters suitable for display to a user, in order to directly convey to the user in user-readable form an indication of the content transmission; this "user-readable" information could also be a video or audio preview of the content transmission;
- a starting time of the content transmission;
- a duration of the content transmission;
- a type of the content transmission, e.g. video, audio, etc.;
- a coding of the content transmission, e.g. coding type; necessary decoding information, etc.; and
- a point-to-multipoint transmission channel on which to receive the content transmission. It is noted that the term "point-to-multipoint transmission channel" is to be understood generically as relating to any transmission path to which a receiver can switch in order to receive a communication, e.g. frequency channel, time slot, bearer, etc.

As a further possibility, the service notification message of step S1 may comprise control information for conducting the response procedure. This control information can be in any suitable or desirable form, depending on the specific needs and requirements. For example, the control information could indicate to the recipient
- whether a response procedure is to be performed at all,
- whether to react to receiving the notification, to receiving the content transmission or to both the notification and the content transmission, and/or
- when to send the generated response messages.

This function can be useful when notifying large groups, as then the number of responses can be limited to a certain sub-group, and/or the timing of the response messages can be controlled by the network part 10 in such a way that up-link congestion is avoided.

Beyond comprising an indication of whether to send a response message or not, the control information may also comprise an address of a network entity in the network part 10, to which the response message is to be sent.

As already mentioned previously, the transmission of the point-to-multipoint service notification message of step S1 and the subsequent point-to-multipoint content transmission of step S2 can be conducted in any suitable or desirable way, e.g. they can also be conducted over one and the same point-to-multipoint transmission channel.

The response message sent by one or more of the terminals in step S3 may also comprise information on the identity of the terminal sending the response message.

As already mentioned previously, the determination of the first group performed in step S4 is based upon the responses generated and sent in step S3. As one example, the first group can be defined as all terminals that sent a response at all. In this case, the response procedure performed in the terminals can be such that a response is generated if the point-to-multipoint notification of step S1 and/or the point-to-multipoint content transmission of step S2 are received at all, or the procedure can be somewhat more complicated in that the terminals first assess one or more properties of the notification and/or content transmission, especially the reception quality, and only send a response if the analysed property or properties fulfil certain conditions, e.g. the reception quality exceeds a certain threshold.

In the event that the response procedure conducted in step S3 comprises analysing one or more properties of the received notification message and/or the received content transmission, it is also possible to include a property information indicative of the result of the analysis in the response message. Then the determination performed in step S₄ may comprise analysing this property information in the response messages and determining as the first group of terminal those terminals that sent a response message containing a predetermined property information, e.g. only those responding terminals are placed into the first group that indicate a reception quality exceeding a predetermined threshold.

As already mentioned previously, the second group of terminals identifies those terminals that are to receive a reliable notification. The choice of which terminals to place into the second group can be done in any suitable or desirable way. Preferably, when the content transmission of step S2 is associated with a particular point-to-multipoint service to which terminals can subscribe, the second group of terminals is determined on the basis of the terminals subscribing to this particular service. As an example, such a point-to-multipoint service can be a news service that sends video reports to users whenever something of interest occurs. It is then possible that the second group of terminals is constituted by all subscribers to said service, or that said second group is defined on the basis of a sub-group of said subscribers, e.g. premium users that pay a higher subscription fee.

The reliable notification procedure performed in step S7 can be selected in any suitable or desirable way. For example, it can be a reliable point-to-multipoint transmission, or a reliable point-to-point transmission. When using a point-to-point communication for sending the second service notification message to those members of the second group that do not belong to the first group, it is preferable to use a store-and-forward mechanism for providing reliability, e.g. using SMS. A store-and-forward mechanism generally comprises:
- storing in the network part 10 the message directed to a given terminal that is not communicating with the network part 10, and
- sending a notification information of the stored message and/or the stored message itself to the given terminal when the given terminal starts communicating with the network part again.

The information in the second service notification message that relates to the content transmission can also be chosen as is suitable or desirable. More specifically, this information will depend on the specific circumstances and intentions. For example, if at the time of sending the second service notification message, the first point-to-multipoint content transmission (step S2) has not yet occurred, then the information contained in the second notification message can be identical to the information contained in the first service notification message. On the other hand, if the first point-to-multipoint content transmission has already occurred or is already underway, then the second service notification message may contain appropriate information for receiving a retransmission of the content transmission (e.g. at a later point in time with regard to the first content transmission, but on the same point-to-multipoint transmission path, or on a different point-to-multipoint transmission path), or information on how to retrieve the content transmission on a point-to-point basis, e.g. using the multimedia messaging service (MMS).

Now one possibility of embodying the concepts of the present invention in a communication network will be described with reference to Fig. 1. As already explained previously, the network part 10 shown schematically in Fig. 1 comprises an access and control part 15, and additionally comprises a service providing section 101. The service providing section 101 is arranged to provide point-to-multipoint services for terminals 11-14 accessing said network part 10. The access and call management part 15 is connected to the service providing part 101 by an appropriate gateway 16 (e.g. a gateway GPRS service node (GGSN) in the context of a GPRS system). The example of Fig. 1 additionally shows an entity 17 that acts as a multicast/broadcast service entity, and can be a part of the gateway entity 16, or separate therefrom.

It is remarked that within the context of the present application, the term "entity" refers to any functional arrangement capable of providing predetermined functions; where an entity can consist of hardware, software or any suitable combination of hardware and software, and can be provided in one physical location or spread out over several physical locations.

The service providing section 101 comprises a service configuration entity 102, a service description entity 103, a group management entity 104, which is connected to an associated database 105, a play-out control entity 106 and a content server entity 107, which is in turn connected to an associated database 108. Reference numeral 110 refers to a content transmission connection between the content server entity 107 and the gateway entity 16, in order to perform a content transmission from the content server entity 107 to terminals 11-14 via the gateway entity 16 and the access and call management part 15. Reference numeral 109 refers to signalling connections between all of the entities 16, 17, 102, 103, 104, 106 and 107.

The operation of the service providing part 101 will now be described in more detail. The group management entity 104 uses database 105 to store users subscribed to one of a number of services. Examples of such services are the above-mentioned news service, or a service that shows sports highlights like recently scored goals in football matches that are underway. The group management entity uses an appropriate form of identifier to identify the individual members of a particular service. These identifiers are preferably unique. Examples are the MSISDN (Mobile Station ISDN Number), the IMSI (International Mobile Subscriber Identification), a TMSI (Temporary Mobile Subscriber Identification), an ISDN telephone number, a SIP URL (Session Initiation Protocol Universal Resource Locator), an email address, or an ENUM number. Using such identifiers, the service providing part 101 can identify and address the individual terminals and/or users receiving point-to-multipoint or point-to-point communications.

In the example of Fig. 1, the web server entity 103, which can be accessed by users in any suitable or desirable way, e.g. via the Internet or via a WAP (Wireless Application Protocol) connection, provides users with an interface for subscribing to a service. For example, a specific web page is displayed on the Internet where a user can fill out an appropriate subscription form and then receive corresponding information on the subscribed service. The web server entity 103 communicates with the group management entity 104, in order to on the one hand obtain information to be displayed to the user that intends to subscribe, and on the other hand to provide to the group management entity all subscriber related data after a subscription form has been completed. The actual subscription process may involve several message exchanges between the group management entity 104 and the web server 103. After a successful subscription process, it is possible that the user has received a description of a specific point-to-multipoint communication path (e.g. a specific broadcast channel), in order to be able to listen for point-to-multipoint notification messages (as described in connection with step S1 of Fig. 2). Alternatively, such an information can be sent to the users terminal at the request of the group management entity 104 via the signalling connection via the gateway entity 16 and multicast/broadcast service centre 17. In any case, the group management entity 104 adds the newly subscribed user to the list of users subscribed for the particular service. Preferably, an IP address and/or a human readable address (e.g. of the format <XY>@<domainname>.<extension>) is stored in the database 105.

The play-out control entity 106 has the function of controlling the establishment of a downlink communication path from the network part 10 to the terminals 11-14 and to control the actual play-out of the content (step S2 in Fig. 2). The play-out control entity 106 determines if a (first) procedure for notifying terminals and performing a content transmission is to occur. For example, with reference to the above example of the news service, this can be done on the basis of a trigger message from outside of the communication network (e.g. from the Internet), which indicates that some news-worthy occurrence has taken place and that a point-to-multipoint content transmission is to be performed. The play-out control entity 106 correspondingly sends a command signal to the multicast/broadcast service centre 17, to establish a transmission path or transmission bearer through the access and call management part 15 to terminals 11-14. In other words, the access and call management part is required to assign appropriate resources. The multicast/broadcast service centre uses an appropriate message to trigger the gateway entity 16 and the access and call management part 15 to allocate the appropriate resources. The multicast/broadcast service centre 17 may monitor the progress of allocating the resources, and then acknowledges the successful establishment of a point-to-multipoint path to the play-out control entity 106. Thereupon the play-out control entity 106 sends a point-to-multipoint notification message as described previously in connection with step S1 of Fig. 2. For example, the SAP (Session Announcement Protocol) can be used for this purpose, in connection with the Session Description Protocol (SDP) for describing particulars of the content transmission that is being announced. As already described previously, the service notification message may also contain additional information about the content, such as used codecs, used ports, time of start, etc.

The responses generated by terminals in the response procedure (step S3 in Fig. 2) are collected at the group management entity 104. The group management entity 104 performs the verification procedure described above in connection with steps S4 to S7 in Fig. 2. For example, the group management entity 104 uses as the second group all terminals subscribed to the given surface for which the play-out control entity 106 initiated the point-to-multipoint notification, and the members of the first group are determined as all those terminals that responded. Naturally, the other alternatives for determining the first and second group can also be implemented.

For all those members of the second group that are not in the first group, the group management entity 104 initiates the second (reliable) notification procedure described above in connection with step S7 of Fig. 2. This initialisation can be done by signalling messages from the group management entity 104 to the multicast/broadcast service centre 17 and the gateway 16, or can be done by letting the group management entity 104 send signalling commands to the play-out control entity 106, which in turn performs the reliable notification procedure.

It is noted that the response messages sent by the terminals 11-14 may contain address information identifying the group management entity 104. On the other hand, it is also possible that the response messages sent by the terminals only indicate that they are response messages sent in response to receiving a point-to-multipoint notification and/or point-to-multipoint content transmission (e.g. by using a certain format or setting a specific information in a predetermined field), and the access and call management part 15 then routes these response messages to the group management entity 104 on the basis of signalling information provided by the multicast/broadcast service center 17 and/or the service providing part 101 to the access and call management part 15.

Equally, it is possible that the response messages sent by the terminals 11-14 contain identity information on the specific terminal sending the response (such as one or more of the above indicated identifiers). On the other hand, it is also possible that such identification information is added to the response messages by the access and call management part 15 before these messages are forwarded to the group management entity 104.

The actual performing of the content transmission from the content server entity 107 via the gateway 16 and access/control part 15 to the terminals 11-14 can be arranged in any suitable or desirable way. For example, the system can be arranged in such a way that the content server entity 107 must first be authorized by the play-out control entity 106. For this, the server entity 107 contacts the play-out control entity 106 with service information, upon which the play-out control entity 106 performs an authorization of the server entity 107 and checks whether the service provisioning is allowed. Examples of information to be provided by the server entity 107 to the play-out control entity 106 for allowance analysis include: type of service (such as premium, low value, etc.), participants (expected number, maximum number, minimum number, etc.), quality of service information (required bandwidth, delay, jitter, etc.), codecs information, and synchronisation requirements (i.e. relation to other simultaneous sessions). The negotiation of service provisioning between the play-out control entity 106 and the content server entity 107 can also comprise several message exchanges.

It can be expected that the (streaming) service quality is slightly degraded for a multicast/broadcast service compared to a unicast (point-to-point) service. Both the content provider and the network operator may want to decide on a per session base whether the service should be delivered as point-to-multipoint or point-to-point. A content provider can ask for a point-to-multipoint service (e.g. to offer a cheaper service), but still require a minimum level of service quality to be fulfilled by the network operator. On the other hand, the content provider may request a service for a number of clients simultaneously. The network operator can then propose to the content provider to deliver the service via multicast/broadcast. It is then up to the content provider to accept this proposal. These negotiations will also take place between the content server entity 107 and the play-out control entity 106. Optionally, the play-out control entity 106 may ask for expected service quality information from the gateway 16 or the access and management part 15, in order to provide a more accurate service quality forecast to the content server entity 107.

It may be noted that the content server entity 107 does not necessarily have to form a part of the network section 10, but could also be provided outside of the communication network (e.g. in the Internet) and only be appropriately connected to the communication network of which communication part 10 is a part. If the content server entity 107 is outside of the network part 10, it is preferable that the connection to network part 10 be a secure connection of any known type.

From the above description, it becomes evident that the entities 16, 17 and part 101 are an example of a control section of a communication network for providing point-to-multipoint services to terminals 11-14. Entities 17 and 106 in combination form a service notification controller for controlling the first notification procedure that comprises transmitting a point-to-multipoint service notification message containing information on the content transmission. Entities 17 and 107 form a content transmission controller for controlling the content transmission in point-to-multipoint fashion. The group management entity 104 is a verification and notification controller arranged to receive response messages from terminals in response to receiving the notification message and/or the content transmission, for controlling a verification procedure that comprises determining the identities of a first group of terminals on the basis of the response messages and comparing the identities of the terminals of said first group with entities of a second group of terminals associated with the content transmission, and for those terminals of said second group that are not in said first group, controlling a second notification procedure that comprises sending a second service notification message to those terminals of said second group that are not in said first group, said second service notification message comprising information on said content transmission, and said second notification procedure comprising a mechanism for providing delivery of messages to terminals temporarily not communicating with said network part.

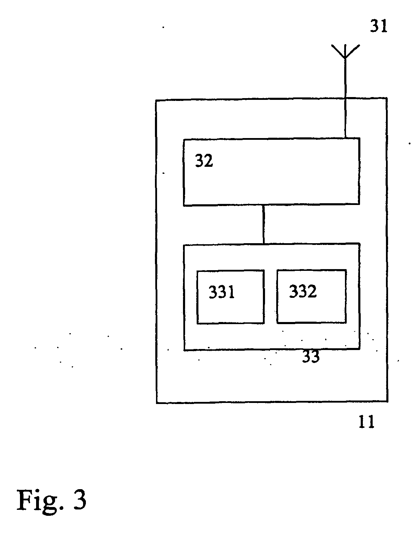

A communication terminal may be adapted to work together with the present invention. An example thereof is schematically shown in Fig. 3, using reference numeral 11 for describing a wireless terminal. However, as already mentioned, a communication terminal can also be wire-bound.

The communication terminal of Fig. 3 comprises a receiver 32 connected to an antenna 31 for receiving service notification messages and content transmissions from the network part 10 (see Fig. 1). A notification message processor 331 is provided for processing service notification messages that comprise information on a content transmission, and for controlling the terminal 11 to receive said content transmission in accordance with said information. Furthermore, a response message generator 332 is provided for generating a response message to said network part 10 (see Fig. 1) in response to receiving a notification message and/or a content transmission.

In the example of Fig. 3, it is noted that the notification message processor 331 and response message generator 332 are software elements run on a processor 33, where said processor 33 controls the overall operation of terminal 11. It is also noted that the representation of Fig. 3 only shows those parts that are significant for the present description, and that conventionally known parts of a terminal, such as a display, keyboard, etc. are not shown for simplicity.

Preferably, the communication terminal 11 comprises an analyser or analysing entity for analysing one or more properties of the received notification message and/or the received content transmission, preferably the reception quality. This analyser (not shown in Fig. 3) can also be provided as a software element running on processor 33. The response message generator 332 is preferably arranged to include a property information indicative of the analysis result of the analyser in response messages sent to the network part 10.

Although the present invention has been described with reference to detailed embodiments, these only serve to provide a more comprehensive understanding of the invention, and are not intended to be limiting. Much rather, the scope of protection is defined by the appended claims. Reference numerals in the claims serve to increase legibility and are also not intended to be limiting.

## Claims

1. A method of providing point-to-multipoint services in a communication system that comprises a network part (10) and terminals (11-14) arranged for communicating with said network part (10), said method comprising:
- in said network part (10), performing (S1) a first notification procedure that comprises transmitting a point-to-multipoint service notification message that comprises information on a content transmission, and performing (S2) said content transmission in point-to-multipoint fashion,
- in one or more of said terminals (11-14), performing (S3) a response procedure for sending a response message to said network part (10) in response to receiving said notification message and/or said content transmission,
the method being **characterised by**
- in said network part (10), performing a verification procedure (S4-S7) that comprises determining (S4) the identities of a first group of terminals on the basis of the response messages and comparing (S5) the identities of the terminals of said first group with identities of a second group of terminals associated with the content transmission, and for those terminals of said second group that are not in said first group, performing (S7) a second notification procedure that comprises sending a second service notification message to those terminals of said second group that are not in said first group, said second service notification message comprising information on said content transmission, and said second notification procedure comprising a mechanism for providing delivery of messages to terminals temporarily not communicating with said network part.

2. A method according to claim 1, wherein said communication system is a wireless communication system and said terminals (11-14) are mobile terminals.

3. A method according to claim 1 or 2, wherein said information on said content transmission contained in said point-to-multipoint service notification message comprises one or more of
- a set of alphanumeric characters suitable for display to a user,
- a starting time of said content transmission,
- a duration of said content transmission,
- a type of said content transmission,
- a coding of said content transmission, and
- a point-to-multipoint transmission channel on which to receive said content transmission.

4. A method according to one of the preceding claims, wherein said point-to-multipoint service notification message comprises control information for conducting said response procedure.

5. A method according to claim 4, wherein said control information comprises one or both of:
- an indication of whether to send a response message or not, and
- an address of a network entity in said network part, to which said response message is to be sent.

6. A method according to one of the preceding claims, wherein said point-to-multipoint service notification message and said subsequent point-to-multipoint content transmission are conducted over the same point-to-multipoint transmission channel.

7. A method according to one of the preceding claims, wherein said response message comprises information on the identity of the terminal sending the response.

8. A method according to one of the preceding claims, wherein said verification procedure comprises determining as said first group of terminals those terminals that sent a response message.

9. A method according to one of claims 1 to 7, wherein said verification procedure comprises analysing the information contained in the received response messages and determining as said first group of terminals those terminals that sent a response message containing a predetermined information.

10. A method according to claim 9, wherein
- said response procedure comprises analysing one or more properties of said received notification message and/or said received content transmission and including a property information indicative of the result of said analysis in said response message, and
- said verification procedure comprises analysing said property information.

11. A method according to claim 10, wherein said one or more properties comprise the reception quality.

12. A method according to one of the preceding claims, wherein said content transmission is associated with a particular point-to-multipoint service to which terminals can subscribe, and said second group of terminals is determined on the basis of the terminals subscribed to said particular service.

13. A method according to one of the preceding claims, wherein said second service notification message is sent as a point-to-point communication.

14. A method according to claim 13, wherein said point-to-point communication comprises as said mechanism for providing delivery of messages to terminals temporarily not communicating with said network part a store-and-forward mechanism, said store-and forward mechanism comprising
- storing in said network part a message directed to a given terminal that is not communicating with said network part, and
- sending a notification informing of the stored message and/or said stored message to said given terminal when said given terminal starts communicating with said network part.

15. A control section (16, 17, 101) of a communication network that comprises a network part (10) and terminals (11-14) arranged for communicating with said network part (10), said control section (16, 17, 101) belonging to said network part (10) and being arranged to control the providing of point-to-multipoint services to terminals (11-14), said control section comprising:
- a service notification controller (17, 106) for controlling a first notification procedure that comprises transmitting a point-to-multipoint service notification message containing information on a content transmission,
- a content transmission controller (17, 107) for controlling said content transmission to be performed in point-to-multipoint fashion, and
- a verification and notification controller (104) arranged to receive response messages from terminals sent by terminals in response to receiving said notification message and/or said content transmission, the verification and notification controller being **characterised in that** it is further arranged to control a verification procedure that comprises determining the identities of a first group of terminals on the basis of the response messages and comparing the identities of the terminals of said first group with identities of a second group of terminals associated with the content transmission, and for those terminals of said second group that are not in said first group, controlling a second notification procedure that comprises sending a second service notification message to those terminals of said second group that are not in said first group, said second service notification message comprising information on said content transmission, and said second notification procedure comprising a mechanism for providing delivery of messages to terminals temporarily not communicating with said network part.

## Patentansprüche

1. Ein Verfahren zum Bereitstellen von Punkt-zu-Multipunkt-Diensten in einem Kommunikationssystem, das ein Netzwerkteil (10) und Endgeräte (11-14) umfasst, die angeordnet sind zum Kommunizieren mit dem Netzwerkteil (10), wobei das Verfahren umfasst:
- in dem Netzwerkteil (10), Ausführen (S1) eines ersten Benachrichtigungsvorgangs, der umfasst, Übertragen einer Punkt-zu-Multipunkt-Dienst-Benachrichtigungsnachricht, die Information hinsichtlich einer Inhaltsübertragung umfasst, und Ausführen (S2) der Inhaltsübertragung auf eine Punkt-zu-Multipunkt-Art,
- in einem oder mehreren der Endgeräte (11-14), Ausführen (S3) eines Antwortvorgangs zum Senden einer Antwortnachricht an den Netzwerkteil (10) in Ansprechen auf ein Empfangen der Benachrichtigungsnachricht und/oder der Inhaltsübertragung,
wobei das Verfahren **gekennzeichnet ist, durch**
- in dem Netzwerkteil (10), Ausführen eines Verifizierungsvorgangs (S4-S7), der umfasst, Bestimmen (S4) der Identitäten einer ersten Gruppe an Endgeräten, basierend auf den Antwortnachrichten und Vergleichen (S5) der Identitäten der Endgeräte der ersten Gruppe mit Identitäten einer zweiten Gruppe von Endgeräten, die im Zusammenhang stehen mit der Inhaltsübertragung, und für solche Endgeräte der zweiten Gruppe, die nicht in der ersten Gruppe sind, Ausführen (S7) eines zweiten Benachrichtigungsvorgangs, der umfasst, Senden einer zweiten Dienst-Benachrichtigungsnachricht an solche Endgeräte der zweiten Gruppe, die nicht in der ersten Gruppe sind, wobei die zweite Dienst-Benachrichtigungsnachricht Information hinsichtlich der Inhaltsübertragung umfasst, und der zweite Dienst-Benachrichtigungsvorgang einen Mechanismus zum Bereitstellen eines Lieferns von Nachrichten an Endgeräte umfasst, die vorübergehend nicht mit dem Netzwerkteil kommunizieren.

2. Ein Verfahren nach Anspruch 1, wobei das Kommunikationssystem ein drahtloses Kommunikationssystem ist, und die Endgeräte (11-14) Mobilendgeräte oder Mobilfunkendgeräte sind.

3. Ein Verfahren nach Anspruch 1 oder 2, wobei die Information hinsichtlich der Inhaltsübertragung, die in der Punkt-zu-Multipunkt-Dienst-Benachrichtigungsnachricht enthalten ist, eines oder mehr der folgenden umfasst
- eine Gruppe von alphanumerischen Zeichen, passend zum Zeigen eines Benutzers,
- eine Startzeit der Inhaltsübertragung,
- eine Dauer der Inhaltsübertragung,
- einen Typ der Inhaltsübertragung;
- eine Codierung der Inhaltsübertragung, und
- einen Punkt-zu-Multipunkt-Übertragungskanal, auf dem die Inhaltsübertragung zu empfangen ist.

4. Ein Verfahren nach einem der vorhergehenden Ansprüche, wobei die Punkt-zu-Multipunkt-Dienst-Benachrichtigungsnachricht Steuerinformation umfasst zum Durchführen des Antwortvorgangs.

5. Ein Verfahren nach Anspruch 4, wobei die Steuerinformation eines oder beides umfasst von:
- einem Hinweis, ob eine Antwortnachricht zu senden ist oder nicht, und
- einer Adresse eines Netzwerkelements in dem Netzwerkteil, an die die Antwortnachricht zu senden ist.

6. Ein Verfahren nach einem der vorhergehenden Ansprüche, wobei die Punkt-zu-Multipunkt-Dienst-Benachrichtigungsnachricht und die nachfolgende Punkt-zu-Multipunkt-Inhaltsübertragung durchgeführt werden über den gleichen Punkt-zu-Multipunkt-Übertragungskanal.

7. Ein Verfahren nach einem der vorhergehenden Ansprüche, wobei die Antwortnachricht Information hinsichtlich der Identität des die Antwort sendenden Endgeräts umfasst.

8. Ein Verfahren nach einem der vorhergehenden Ansprüche, wobei der Verifizierungsvorgang umfasst Bestimmen als die erste Gruppe der Endgeräte, die Endgeräte, die eine Antwortnachricht gesendet haben.

9. Ein Verfahren nach einem der Ansprüche 1 bis 7, wobei der Verifizierungsvorgang analysierende Information umfasst, die in den empfangenen Antwortnachrichten enthalten ist, und Bestimmen als die erste Gruppe von Endgeräten, die Endgeräte, die eine Antwortnachricht gesendet haben, die eine vorbestimmte Information enthält.

10. Ein Verfahren nach Anspruch 9, wobei
- der Antwortvorgang Analysieren einer oder mehrerer Eigenschaften der empfangenen Benachrichtigungsnachricht und/oder der empfangenen Inhaltsübertragung umfasst, sowie Einschließen einer Eigenschaftsinformation, die kennzeichnend ist für das Ergebnis der Analyse in der Antwortnachricht, und
- der Verifizierungsvorgang Analysieren der Eigenschaftsinformation umfasst.

11. Ein Verfahren nach Anspruch 10, wobei die eine oder mehr Eigenschaften die Empfangsqualität umfasst.

12. Ein Verfahren nach einem der vorhergehenden Ansprüche, wobei die Inhaltsübertragung im Zusammenhang steht mit einem besonderen Punkt-zu-Multipunkt-Dienst, bei dem Endgeräte teilnehmen können, und die zweite Gruppe von Endgeräten bestimmt wird, basierend auf den Endgeräten, die an dem bestimmten Dienst teilnehmen.

13. Ein Verfahren nach einem der vorhergehenden Ansprüche, wobei die zweite Dienst-Benachrichtigungsnachricht als eine Punkt-zu-Punkt-Kommunikation gesendet wird.

14. Ein Verfahren nach Anspruch 13, wobei die Punkt-zu-Punkt-Kommunikation als Mechanismus zum Bereitstellen eines Lieferns von Nachrichten an Endgeräte, die vorübergehend nicht mit dem Netzwerkteil kommunizieren, einen Speicher-und-Weiterleit-Mechanismus umfasst, wobei der Speicher- und-Weiterleit-Mechanismus umfasst:
- Speichern in dem Netzwerkteil einer Nachricht, die an ein bestimmtes Endgerät gerichtet ist, das nicht mit dem Netzwerkteil kommuniziert, und
- Senden einer Benachrichtigung, die über die gespeicherte Nachricht und/oder die gespeicherte Nachricht an das bestimmte Endgerät informiert, wenn das bestimmte Endgerät anfängt, mit dem Netzwerkteil zu kommunizieren.

15. Ein Steuerabschnitt (16, 17, 101) eines Kommunikationsnetzwerks, das ein Netzwerkteil (10) und Endgeräte (11-14) umfasst, die angeordnet sind zum Kommunizieren mit dem Netzwerkteil (10), wobei der Steuerabschnitt (16, 17, 101) zu dem Netzwerk (10) gehört und angeordnet ist zum Steuern bzw. Regeln des Bereitstellens von Punkt-zu-Multipunkt-Diensten an Endgeräte (11-14), wobei der Steuerabschnitt umfasst:
- einen Dienst-Benachrichtungs-Controller (17, 106) zum Steuern eines ersten Benachrichtigungsvorgangs, der umfasst, Übertragen einer Punkt-zu-Multipunkt-Dienst-Benachrichtigungsnachricht, die Information hinsichtlich einer Inhaltsübertragung enthält,
- einen Inhaltsübertragungs-Controller (17, 107) zum Steuern der Inhaltsübertragung, die auszuführen ist auf eine Punkt-zu-Multipunkt-Art, und
- einen Verifizierungs- und Benachrichtigungs-Controller (104), der angeordnet ist zum Empfangen von Antwortnachrichten von Endgeräten, die durch Endgeräte gesendet werden, in Ansprechen auf ein Empfangen der Benachrichtigungsnachricht und/oder der Inhaltsübertragung,
wobei der Verifizierungs- und Benachrichtigungs-Controller **dadurch gekennzeichnet ist, dass** er ferner angeordnet ist zum Steuern eines Verifizierungsvorgangs, der umfasst, Bestimmen der Identitäten einer ersten Gruppe von Endgeräten, basierend auf den Antwortnachrichten und Vergleichen der Identitäten der Endgeräte der ersten Gruppe mit den Identitäten einer zweiten Gruppe von Endgeräten, die im Zusammenhang stehen mit der Inhaltsübertragung, und für solche Endgeräte der zweiten Gruppe, die nicht in der ersten Gruppe sind, Steuern eines zweiten Benachrichtigungsvorgangs, der umfasst, Senden einer zweiten Dienst-Benachrichtigungsnachricht an solche Endgeräte der zweiten Gruppe, die nicht in der ersten Gruppe sind, wobei die zweite Dienst-Benachrichtigungsnachricht Information hinsichtlich der Inhaltsübertragung umfasst, und der zweite Dienst-Benachrichtigungsvorgang einen Mechanismus umfasst zum Bereitstellen eines Lieferns von Nachrichten an Endgeräte, die vorübergehend nicht mit dem Netzwerkteil kommunizieren.

## Revendications

1. Procédé de fourniture de services de point à multipoint dans un système de communication qui comprend une partie réseau (10) et des terminaux (11 à 14) agencés pour communiquer avec ladite partie réseau (10), ledit procédé comprenant :
- dans ladite partie réseau (10), l'exécution (S1) d'une première procédure de notification qui comprend la transmission d'un message de notification de service de point à multipoint qui comprend de l'information sur une transmission de contenu, et l'exécution (S2) de ladite transmission de contenu d'une manière point à multipoint ;
- dans un ou plusieurs desdits terminaux (11 à 14), l'exécution (S3) d'une procédure de réponse destinée à envoyer un message de réponse à ladite partie réseau (10) en réponse à la réception dudit message de notification et/ou de ladite transmission de contenu ;
le procédé étant **caractérisé par** :
- dans ladite partie réseau (10), l'exécution d'une procédure (S4 à S7) de vérification qui comprend la détermination (S4) des identités d'un premier groupe de terminaux sur la base des messages de réponse et la comparaison (S5) des identités des terminaux dudit premier groupe avec des identités d'un second groupe de terminaux associés à la transmission de contenu, et pour les terminaux dudit second groupe qui ne sont pas dans ledit premier groupe, l'exécution (S7) d'une seconde procédure de notification qui comprend l'envoi d'un second message de notification de service aux terminaux dudit second groupe qui ne sont pas dans ledit premier groupe, ledit second message de notification de service comprenant de l'information sur ladite transmission de contenu, et ladite seconde procédure de notification comprenant un mécanisme destiné à prévoir la délivrance de messages à des terminaux ne communiquant pas temporairement avec ladite partie réseau.

2. Procédé selon la revendication 1, dans lequel ledit système de communication est un système de communication sans fil et lesdits terminaux (11 à 14) sont des terminaux mobiles.

3. Procédé selon la revendication 1 ou 2, dans lequel ladite information sur ladite transmission de contenu contenue dans ledit message de notification de service de point à multipoint comprend un ou plusieurs :
- d'un ensemble de caractères alphanumériques approprié pour affichage pour un utilisateur ;
- d'un instant de début de ladite transmission de contenu ;
- d'une durée de ladite transmission du contenu ;
- d'un type de ladite transmission du contenu ;
- d'un codage de ladite transmission du contenu ; et
- d'une voie de transmission de point à multipoint sur laquelle recevoir ladite transmission de contenu.

4. Procédé selon l'une des revendications précédentes, dans lequel ledit message de notification de service de point à multipoint comprend de l'information de commande destinée à conduire ladite procédure de réponse.

5. Procédé selon la revendication 4, dans lequel ladite information de commande comprend l'une ou les deux :
- d'une indication de ce que l'on doit envoyer ou non un message de réponse ; et
- d'une adresse d'une entité de réseau dans ladite partie réseau, à laquelle ledit message de réponse est à envoyer.

6. Procédé selon l'une des revendications précédentes, dans lequel ledit message de notification de service de point à multipoint et ladite transmission ultérieure de contenu de point à multipoint se font sur la même voie de transmission de point à multipoint.

7. Procédé selon l'une des revendications précédentes, dans lequel ledit message de réponse comprend de l'information sur l'identité du terminal envoyant la réponse.

8. Procédé selon l'une des revendications précédentes, dans lequel ladite procédure de vérification comprend la détermination, comme ledit premier groupe de terminaux, des terminaux qui envoient un message de réponse.

9. Procédé selon l'une des revendications 1 à 7, dans lequel ladite procédure de vérification comprend l'analyse de l'information contenue dans les messages de réponse reçus et la détermination, comme ledit premier groupe de terminaux, des terminaux qui envoient un message de réponse contenant une information prédéterminée.

10. Procédé selon la revendication 9 :
- dans lequel ladite procédure de réponse comprend l'analyse d'une ou plusieurs propriétés dudit message de notification reçu et/ou de ladite transmission de contenu reçue et incluant une formation de propriété représentative du résultat de ladite analyse dans ledit message de réponse ; et
- dans lequel ladite procédure de vérification comprend l'analyse de ladite information de propriété.

11. Procédé selon la revendication 10, dans lequel lesdites une ou plusieurs propriétés comprennent la qualité de réception.

12. Procédé selon l'une des revendications précédentes, dans lequel ladite transmission de contenu est associée à un service de point à multipoint particulier auquel des terminaux peuvent souscrire, et dans lequel ledit second groupe de terminaux est déterminé sur la base des terminaux ayant souscrit audit service particulier.

13. Procédé selon l'une des revendications précédentes, dans lequel ledit second message de notification de service est envoyé comme une communication de point à point.

14. Procédé selon la revendication 13, dans lequel ladite communication de point à point comprend, en tant que ledit mécanisme destiné à prévoir la délivrance de messages à des terminaux ne communiquant pas temporairement avec ladite partie réseau, un mécanisme de mémorisation et acheminement, ledit mécanisme de mémorisation et acheminement comprenant :
- la mémorisation dans ladite partie réseau d'un message dirigé vers un terminal donné qui n'est pas en communication avec ladite partie réseau ; et
- l'envoi d'une notification informant du message mémorisé, et/ou dudit message mémorisé, audit terminal donné lorsque ledit terminal donné commence à communiquer avec ladite partie réseau.

15. Section (16, 17, 101) de commande d'un réseau de communication qui comprend une partie réseau (10) et des terminaux (11 à 14) agencés pour communiquer avec ladite partie réseau (10), ladite section (16, 17, 101) de commande appartenant à ladite partie réseau (10) et étant agencée pour commander la fourniture de services de point à multipoint aux terminaux (11 à 14), ladite section de commande comprenant :
- un régisseur (17, 106) de notification de service destiné à commander une première procédure de notification qui comprend la transmission d'un message de notification de service de point à multipoint contenant de l'information sur une transmission de contenu ;
- un régisseur (17, 107) de transmission de contenu destiné à commander ladite transmission de contenu d'une manière point à multipoint ; et
- un régisseur (104) de vérification et de notification agencé pour recevoir des messages de réponse provenant des terminaux envoyés par des terminaux en réponse à la réception dudit message de notification et/ou de ladite transmission de contenu, le régisseur de vérification et de notification étant **caractérisé en ce qu'**il est agencé en outre pour commander une procédure de vérification qui comprend la détermination des identités d'un premier groupe de terminaux sur la base des messages de réponse et la comparaison des identités des terminaux dudit premier groupe avec des identités d'un second groupe de terminaux associés à la transmission de contenu, et pour les terminaux dudit second groupe qui ne sont pas dans ledit premier groupe, commander une seconde procédure de notification qui comprend l'envoi d'un second message de notification de service aux terminaux dudit second groupe qui ne sont pas dans ledit premier groupe, ledit second message de notification de service comprenant de l'information sur ladite transmission de contenu, et ladite seconde procédure de notification comprenant un mécanisme destiné à prévoir la délivrance de messages à des terminaux ne communiquant pas temporairement avec ladite partie réseau.
